(19) Europäisches Patentamt
European Patent Office
Office européen des brevets

(11) Publication number: 0 176 132 B1

# (12) EUROPEAN PATENT SPECIFICATION

(45) Date of publication of patent specification: 08.02.89

(51) Int. Cl.$^4$: C 07 F 9/40, C 08 F 299/04

(21) Application number: 85201432.3

(22) Date of filing: 10.09.85

## (54) Adhesion promoters for metal substrates.

(30) Priority: 20.09.84 IT 2273484

(43) Date of publication of application:
02.04.86 Bulletin 86/14

(45) Publication of the grant of the patent:
08.02.89 Bulletin 89/06

(84) Designated Contracting States:
AT BE CH DE FR GB LI LU NL SE

(56) References cited:
GB-A-1 393 545

CHEMICAL ABSTRACTS, vol. 89, no. 14, 2nd October 1978, page 11, no. 110545b, Columbus, Ohio, US; A.P. KHARDIN et al.: "Study of the radical copolymerization of methacrylic derivatives of phosphonic acids", & VYSOKOMOL. SOEDIN. SER. B. 1978, 20(5), 377-80

JOURNAL OF GENERAL CHEMISTRY OF THE USSR, vol. 54, no. 5, part 2, May 1984, pages 1034-1038, Plenum Pulishing Corp.; A.K. KHARDIN et al.: "Kinetics of the reaction of phenyl hydrogen methylphosphonate with 2,3-epoxypropyl methacrylate"

(73) Proprietor: ENICHEM SYNTHESIS S.p.A.
Via Ruggero Settimo 55
I-90139 Palermo (IT)

(72) Inventor: Greco, Alberto
Via Mughetti 2
I-20077 Dresano (Milan) (IT)
Inventor: Butturini, Renato
Via Monviso 48
I-21056 Induno Olona (Varese) (IT)
Inventor: Arrighetti, Sergio
Via Trieste 16
I-20097 S. Donato Milanese (Milan) (IT)

(74) Representative: Roggero, Sergio et al
Ing. Barzanò & Zanardo Milano S.p.A. Via Borgonuovo 10
I-20121 Milano (IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 176 132 B1

Courier Press, Leamington Spa, England.

## Description

This invention relates to adhesion-promoters intended to improve the adhesion of cross-linkable paints to a metallic substrate.

It is known that the adhesion of crosslinkable paints to metal substrates is generally poor, especially in environments in which high percentages of atmospheric humidity are present.

Many attempts have been made by the prior art to overcome these shortcomings.

Representative of these attempts is the GB—A—1 393 545 according to which unsaturated phosphate esters have been disclosed, which are compounds selected from:

(A) 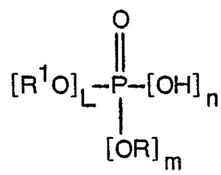

wherein R is selected from the group consisting of:

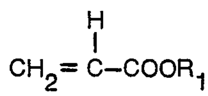, 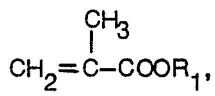, 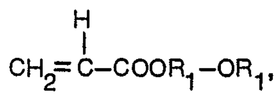, 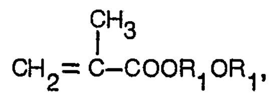,

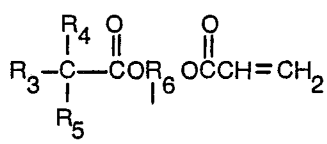 or 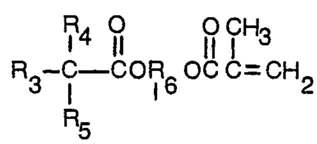

wherein $R_1$ is an alkylene radical, $R_3$ is hydrogen or an alkyl radical, $R_4$ is hydrogen or an alkyl radical, $R_5$ is hydrogen or an alkyl radical, $R_6$ is a trivalent organic moiety, R' is selected from the group consisting of an alkyl radical and

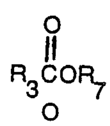

$R_7$ is $R_1OR_1$ or $R_7$, n is either 1 or 2, m is either 1 or 2, L is either 0 or 1, and n + m + L = 3, and

(B) 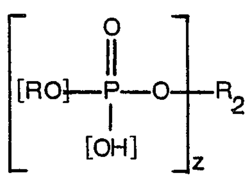

wherein R is as defined above, $R_2$ has the formula:

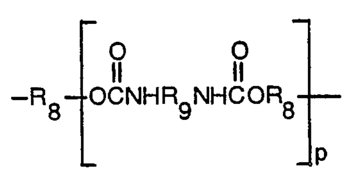 or 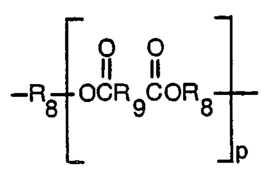

wherein $R_8$ is

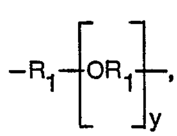, 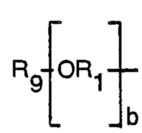 or 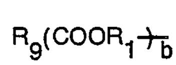

wherein $R_1$ is as defined above, $R_9$ is alkylene, alkenylene, arylene, or aralkylene, p is from 0 to 30, y is from 0 to 20, b is 3 to 5, and z is 2, and

(C) 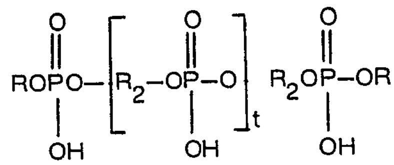

wherein R and $R_2$ are as defined above and t is from 1 to 5.

In spite of the attempts of the prior art as outlined above, the problem of adhesion-promotion in moist environments was far from being solved satisfactorily, very presumably in view of the highly acidic character of the coatings suggested by the prior art in general.

The problem has been solved by a novel class of adhesion promoters which, on the one hand, introduce a sufficient quantity of polar groups so as to improve adhesion on the metal-paint interface, and, on the other hand, do not encourage corrosion to an unacceptable degree.

The adhesion-promoters according to this invention, generally speaking, are derivatives of phosphonoacetic acid and are not exposed to the objections to which the esters of phosphoric acid of the prior art were exposed, that is, their proneness to corrosion sensitivity: the adhesion-promoters according to this invention exhibit a low absolute acidity with the presence of two adjoining hydroxyls, either of which is inorganic and the other of an organic nature, the arrangement being such as to exhibit a capability of chelating metal ions.

Therefore, according to the invention, there is provided a class of adhesion promoters, consisting of a mixture of mono- and diesters having the general formula:

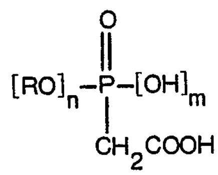

wherein

R is either

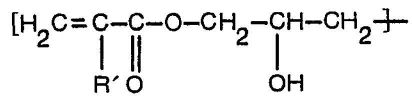

or 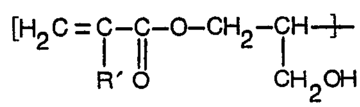

R' is H or $CH_3$;

n is 1 or 2, and

m is 0 or 1.

The invention also provides a process for preparing the ester mixture defined hereinabove by reacting glycidyl acrylate (GA) with dihydroxyphosphonoacetic acid, or by reacting glycidyl methacrylate (GMA) with dihydroxyphosphonoacetic acid (DHPAA).

The reaction is carried out with GA/DHPAA molar ratios or GMA/DHPAA molar ratios from 1:1,2 to 1:1,85, the preferable range for these ratios being from 1:1,35 to 1:1,6, still in molar ratio terms.

The preferred temperature range for this reaction is between 20°C and 140°C, and most recommendable for good results is the range from 60°C to 100°C.

For practical reasons, it is preferred to add to the reaction mixture a polymerization inhibitor: the amount of this inhibitor may range from 0,01% to 1% by weight relatively to the weight of the reaction mixture; still more preferably, the range of the quantity of polymerization inhibitor is from 0,1% to 0,5% of the weight of the reaction mixture.

Preferred polymerization inhibitors are hydroquinone derivatives, such as toluquinone and hydroquinone methyl ester.

The ester mixture defined hereinabove is obtained with quantitative yields and no purification steps are thus required: the solvent, if any, is distilled off under reduced pressures at a temperature not above 70°C, and preferably not above 40°C.

Should a solvent be selected, tetrahydrofuran is preferred and the reaction can run smoothly without any added catalyst. The mono- and diester mixture defined by the general formula reported hereinabove and in claim 1, is soluble in the common organic solvents and also in acrylic monomers, and, in addition, it can be stored in its pure state, or, as an alternative, in the form of its solution in acrylic oligomers, in the proportion of from 10% to 50% by weight of acrylic oligomer(s) relative to the ester mixture in question: suggested acrylic oligomers are butanediol diacrylate, hexanediol diacrylate and diethyleneglycol diacrylate.

When using the mono- and diester mixture of the general formula reported above as an adhesion promoter to enhance the adhesion of a crosslinkable paint of the kind referred to above, the metal substrates which proved to be the most suitable are iron, iron alloys, aluminium and copper, and the crosslinkable paints can be selected from among acrylate polyester paints, maleate polyester paints, acrylate acrylic paints, acrylate urethan paints, diallyphthalate paints and acrylate silicone paints.

The mixture of mono- and diesters defined in claim 1 hereof is generally used in amounts not higher than 10% by weight relative to the weight of the paint concerned, and the preferred range for practical uses is between 1% and 3%, still on a weight basis as aforesaid.

The invention will be better illustrated by the following practical Examples.

## EXAMPLES

### Example 1

A 250-ml, 4-necked flask equipped with nitrogen inlet, thermometer, reflux condenser, dropping funnel and a magnetic stirring device, is charged with dihydroxyphosphonoacetic acid (30 g, 214,3 mmol) dissolved in 100 ml of tetrahydrofuran (THF), and containing 5 mg of phenothiazine and 5 mg of methylhydroquinone, the dissolution taking place at 65°C. The resultant solution was stirred and 35,58 g (32,5 ml, or 282 mmol) of glycidyl acrylate were dripped during one hour thereinto: on completion of the addition, the flask temperature was raised to 80°C, while stirring for two additional hours.

The reaction product was stripped of THF in a rotary evaporator, at 38°C and under a pressure of 66,66 Pa: it is a clear, very viscous oil, having an acid number of 232 mgKOH per g.

A sample of this material was photo-crosslinked, after having been supplemented with 5% by volume of DAROCUR (Reg. Trade Mark), by exposing it to a 450-W UV-lamp at a distance of 15 cm for 60 minutes. More than 90% of the material was insoluble in methylene chloride. The product thus obtained is soluble in the conventional reactive solvents for crosslinkable paints, and is compatible with solventless paints and the usual acrylic diluents as well.

### Example 2

For preparing an unsaturated polyester resin, a 1000-ml, 4-necked flask equipped with nitrogen inlet, mechanical stirrer and a 40-cm Vigreux condenser, was charged with 66,22 g of ethylene glycol, 16,1 g of glycerol, 15 g of triethylene glycol, 59 g of trihydroxymethyl isocyanurate, 104,76 g of dimethyl terephthalate, 28,6 g of diethyl carbonate and 0,75 g of dibutyltin oxide. The flask was dipped into a heating bath at 200°C to start the reaction. Two hours thereafter, the evolution of methanol, ethanol and diethylcarbonate was over. The bath temperature was then raised to 220°C during 30 minutes, the reaction mass being kept stirred at such temperature during one hour. As the temperature dropped to 190°C, 37,9 g of maleic acid anhydride were added during 10 minutes or so. The bath temperature was raised to 200°C—205°C and the reaction was caused to proceed until reaching an acid number of 10.

Upon cooling the bath to 90°C, 0,49 g of benzoquinone was added, whereafter heating was discontinued and a mixture composed of 122,5 g of hexanediol diacrylate and 122,5 g of diethylene glycol diacrylate was added to the reaction mixture. A photoinitiator, 118 g of benzoin isopropyl ether, the thin resultant paint (dynamic viscosity 0,92 Ns/m$^2$ at 25°C) was coated onto a steel plate by a K-control bar to a nominal thickness of 35 μm and crosslinked with 20 passes at a spatial velocity of 25 m/s under a nitrogen blanket using a mercury-vapour lamp having a power of 80 W/cm.

The resultant coating exhibited a complete absence of adhesion under the cross-hatching and adhesive-tape peeling test of ASTM D—3002.

Two discrete paint samples were supplemented with 3% and 5% by weight, respectively, of the adhesion promoter prepared according to Example 1, and two steel plates were coated thereby and the paints crosslinked as described just now: under the same test conditions, 100% adhesion was obtained for both samples.

The plates which passed the adhesion test were immersed in demineralized water at room temperature (25°C) for 24 hours, after having been hemmed with an adhesive tape: no blister was detected and adhesion remained unaffected.

For comparison with Examples 1—3 of GB—A—1 393 545, two discrete samples of the paint referred to above were supplemented with 3% and 5% by weight, respectively, of the reaction product of phosphorus pentoxide and 2-hydroxyethyl acrylate as taught by GB—A—1 393 545: coating on steel plates and crosslinking took place as outlined above. The paints passed the ASTM D—3002 test, but blisters appeared on immersion in demineralized water at room temperature (25°C) for 24 hours and the adhesion test was a failure, since 100% peeling off was experienced.

### Example 3

65,5 g (0,292 mol) of phosphonoacetic acid triethyl ester in 150 ml of 35% conc. HCl were gently refluxed during a 6-hour period, whereafter water and HCl were evaporated off at 90°C—100°C under a vacuum (obtained with a water pump). 100 ml of an 80/20 by volume mixture of toluene and ethanol were added to the thick liquid thus obtained, and the reaction mass was evaporated with a water pump again at 90°C—100°C, to give 35,5 g of a clear viscous syrupy liquor, which contained 0,5% by weight of Cl, corresponding to 0,254 mol (yield 86,8%) of

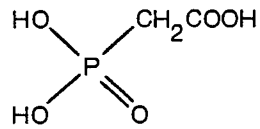

The syrupy liquor was thinned with peroxide-free THF which contained 0,2 g of hydroquinone and 40 ml (44,8 g or 0,347 mol) of glycidyl acrylate were added thereto, the rate of the addition being so adjusted as to keep the temperature within the range of from 75°C to 90°C. This required a time of 20 min to 30 min, care being taken to remove the built up heat. As the reaction was over, another increment of glycidyl acrylate (5 ml, corresponding to 5,56 g or 0,04 mol) was introduced, and the reaction continued during 30 additional minutes at 75°C. Thereafter, 20 ml of diethylene glycol diacrylate were added to the reaction mass and THF was distilled off in a vacuo at 40°C. Yield 105 g (80%).

Example 4

To prepare an unsaturated polyester-polycarbonate resin, a 1000-ml, 4-necked flask, equipped with a nitrogen inlet, a mechanical stirrer and a 40-cm Vigreux condenser with a distillation head, was charged with 66,22 g of ethylene glycol, 16,1 g of glycerol, 15 g of triethylene glycol, 59 g of trihydroxyethyl isocyanurate, 28,6 g of dimethyl terephthalate and 0,85 g of titanium isopropoxide.

The flask was dipped in a bath kept at 200°C and stirring was started, the reaction being allowed to run until the evolution of ethanol and methanol was over, that which took 2 hours; thereafter, the bath temperature was dropped to 190°C and 0,6 g of dibutyltin oxide plus 37,9 g of maleic acid anhydride were added. The bath temperature was raised again to 200°C—250°C and the reaction continued until such time as an acid number of 8 was attained, whereafter the bath was cooled to 100°C and hydroquinone monomethyl ether (0,5 g) was added and the reaction mass diluted to a content of 50% solids in a reactive + solvent mixture composed of 90 ml of hexanediol diacrylate and 90 ml of vinylpyrrolidone, plus 50 ml of diethyleneglycol diacrylate. A sample of the paint thus prepared was supplemented with the 4% of its weight of a photosensitizer, DAROCUR 1173 (Reg. Trade Mark) and the paint was applied to a plate of ordinary steel to a nominal thickness of 12 µm.

The tape adhesion test was a complete failure, while a test run made with 2,5% by weight of the composition of Example 3 hereof produced a thorough adhesion.

**Claims for the Contracting States: BE CH DE FR GB LI LU NL SE**

1. A mixture of mono- and diesters having the general formula:

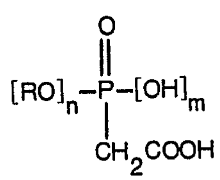

wherein

R is either

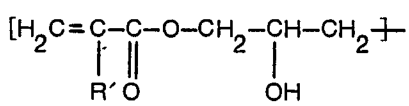

or 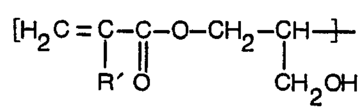

R′ is H or $CH_3$;
n is 1 or 2, and
m is 0 or 1.

2. A process for preparing the mixture of mono- and diesters according to claim 1, characterized in that glycidyl acrylate or glycidyl methacrylate is reacted with dihydroxyphosphonoacetic acid.

3. Process according to claim 2, wherein the molar ratio of glycidyl acrylate to dihydroxyphosphonoacetic acid, or the molar ratio of glycidyl methacrylate to dihydroxyphosphonoacetic acid, is from 1:1,2 to 1:1,85.

4. Process according to claim 3, wherein said molar ratios are from 1:1,35 to 1:1,6.

5. Process according to claim 2, wherein the working temperature is between 20°C and 140°C.

6. Process according to claim 5, wherein the working temperature is between 60°C and 100°C.

7. Process according to claim 2, wherein a polymerization inhibitor is added to the reaction mixture.

8. Process according to claim 7, wherein the polymerization inhibitor is hydroquinone monomethyl ether or toluquinone.

9. Process according to claim 7, wherein the polymerization inhibitor is used in an amount from 0,01% to 1% by weight relative to the reaction mixture.

10. Process according to claim 9, wherein the polymerization inhibitor is used in an amount from 0,1% to 0,5% by weight relative to the reaction mixture.

11. Process according to claim 2, wherein the reaction is carried out in solution.

12. Process according to claim 11, wherein tetrahydrofuran is used as the solvent.

13. Method for forming coatings having a good adhesion to a metal substrate intended to receive a paint which is crosslinkable with UV- and EB-radiations or with peroxides, comprising the step of adding, to the crosslinkable paint concerned, an active adhesion-promoting amount of the ester mixture defined in claim 1.

14. Method according to claim 13, wherein said active adhesion-promoting amount is not higher than the 10% by weight relative to the weight of the crosslinkable paint concerned.

15. Method according to claim 14, wherein said active adhesion-promoting amount is between 1% and 3% of the weight of the paint.

16. Method according to claim 13, wherein the metal substrate is selected from among iron, iron alloys, copper and aluminium.

**Claims for the Contracting State: AT**

1. A process for preparing a mixture of mono- and diesters having the general formula:

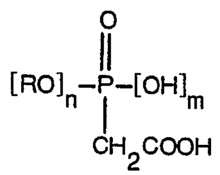

wherein

R is either

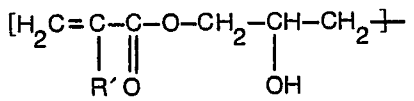

or

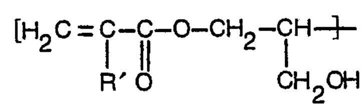

R' is H or $CH_3$;

n is 1 or 2, and

m is 0 or 1,

characterized in that glycidyl acrylate, or glycidyl methacrylate, is reacted with dihydroxyphosphonoacetic acid.

2. Process according to claim 1, wherein the molar ratio of glycidyl acrylate to dihydroxyphosphonoacetic acid, or the molar ratio of glycidyl methacrylate to dihydroxyphosphonoacetic acid, is from 1:1,2 to 1:1,85.

3. Process according to claim 2, wherein said molar ratios are from 1:1,35 to 1:1,6.

4. Process according to claim 1, wherein the working temperature is between 20°C and 140°C.

5. Process according to claim 4, wherein the working temperature is between 60°C and 100°C.

6. Process according to claim 1, wherein a polymerization inhibitor is added to the reaction mixture.

7. Process according to claim 6, wherein the polymerization inhibitor is hydroquinone monomethyl ether or toluquinone.

8. Process according to claim 6, wherein the polymerization inhibitor is used in an amount from 0,01% to 1% by weight relative to the reaction mixture.

9. Process according to claim 8, wherein the polymerization inhibitor is used in an amount from 0,1% to 0,5% by weight relative to the reaction mixture.

10. Process according to claim 8, wherein the reaction is carried out in solution.

11. Process according to claim 1, wherein tetrahydrofuran is used as the solvent.

12. Method for forming coatings having a good adhesion to a metal substrate intended to receive a paint which is crosslinkable with UV- and EB-radiations or with peroxides, comprising the step of adding, to the crosslinkable paint concerned, an active adhesion-promoting amount of the ester mixture defined in claim 1.

13. Method according to claim 12, wherein said active adhesion-promoting amount is not higher than the 10% by weight relative to the weight of the crosslinkable paint concerned.

14. Method according to claim 13, wherein said active adhesion-promoting amount is between 1% and 3% of the weight of the paint.

15. Method according to claim 12, wherein the metal substrate is selected from among iron, iron alloys, copper and aluminium.

**Patentansprüche für die Vertragsstaaten: BE CH DE FR GB LI LU NL SE**

1. Gemisch aus Mono- und Diestern mit der allgemeinen Formel:

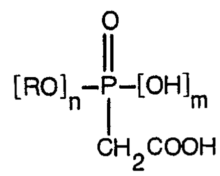

worin

R entweder für

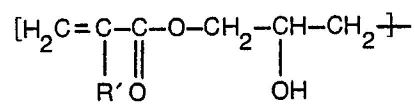

oder für 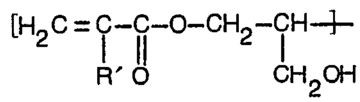

steht;

R' Wasserstoff oder $CH_3$ bedeutet;

n den Wert 1 oder 2 hat und

m den Wert 0 oder 1 aufweist.

2. Verfahren zur Herstellung des Gemisches aus Mono- und Diestern nach Anspruch 1, dadurch gekennzeichnet, daß Glycidylacrylat oder Glycidylmethacrylat mit Dihydroxyphosphonoessigsäure umgesetzt wird.

3. Verfahren nach Anspruch 2, worin das Molverhältnis von Glycidylacrylat zu Dihydroxyphosphonoessigsäure oder das Molverhältnis von Glycidylmethacrylat zu Dihydroxyphosphonoessigsäure von 1:1,2 bis 1:1,85 beträgt.

4. Verfahren nach Anspruch 3, worin die genannten Molverhältnisse von 1:1,35 bis 1:1,6 betragen.

5. Verfahren nach Anspruch 2, worin die Umsetzungstemperatur zwischen 20°C und 140°C liegt.

6. Verfahren nach Anspruch 5, worin die Umsetzungstemperatur zwischen 60°C und 100°C liegt.

7. Verfahren nach Anspruch 2, worin dem Reaktionsgemisch ein Polymerisationsinhibitor zugesetzt wird.

8. Verfahren nach Anspruch 7, worin der Polymerisationsinhibitor Hydrochinonmonomethylether oder Toluchinon ist.

9. Verfahren nach Anspruch 7, worin der Polymerisationsinhibitor in einer Menge von 0,01 bis 1 Gew.-%, bezogen auf das Reaktionsgemisch, verwendet wird.

10. Verfahren nach Anspruch 9, worin der Polymerisationsinhibitor in einer Menge von 0,1 bis 0,5 Gew.-%, bezogen auf das Reaktionsgemisch, verwendet wird.

11. Verfahren nach Anspruch 2, worin die Umsetzung in Lösung ausgeführt wird.

12. Verfahren nach Anspruch 11, worin Tetrahydrofuran als Lösungsmittel verwendet wird.

13. Verfahren zur Ausbildung von Überzügen mit guter Adhäsion an ein Metallsubstrat, das zur Aufnahme einer Farbe vorgesehen ist, die mit UV-Strahlen und Elektronenstrahlen oder mit Peroxiden vernetzbar ist, umfassend die Stufe der Zugabe einer wirksamen adhäsionsfördernden Menge des in Anspruch 1 definierten Estergemisches zu der jeweiligen vernetzbaren Farbe.

14. Verfahren nach Anspruch 13, worin die genannte wirksame adhäsionsfördernde Menge nicht mehr als 10 Gew.-%, bezogen auf das Gewicht der jeweiligen vernetzbaren Farbe, beträgt.

15. Verfahren nach Anspruch 14, worin die genannte adhäsionsfördernde Menge zwischen 1 und 3 Gew.-% der Farbe beträgt.

16. Verfahren nach Anspruch 13, worin das Metallsubstrat unter Eisen, Eisenlegierungen, Kupfer und Aluminium ausgewählt ist.

**Patentansprüche für den Vertragsstaat: AT**

1. Verfahren zur Herstellung eines Gemisches aus Mono- und Diestern mit der allgemeinen Formel:

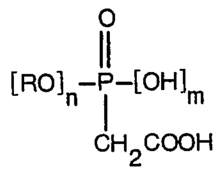

worin

R entweder für

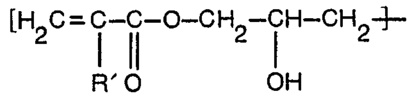

oder für 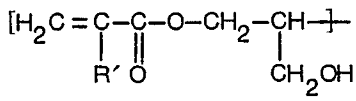

steht;

R' Wasserstoff oder $CH_3$ bedeutet;

n den Wert 1 oder 2 hat und

m den Wert 0 oder 1 aufweist,

dadurch gekennzeichnet, daß Glycidylacrylat oder Glycidylmethacrylat mit Dihydroxyphosphonessigsäure umgesetzt wird.

2. Verfahren nach Anspruch 1, worin das Molverhältnis von Glycidylacrylat zu Dihydroxyphosphonoessigsäure oder das Molverhältnis von Glycidylmethacrylat zu Dihydroxyphosphonoessigsäure von 1:1,2 bis 1:1,85 beträgt.

3. Verfahren nach Anspruch 2, worin die genannten Molverhältnisse von 1:1,35 bis 1:1,6 betragen.

4. Verfahren nach Anspruch 1, worin die Umsetzungstemperatur zwischen 20°C und 140°C liegt.

5. Verfahren nach Anspruch 4, worin die Umsetzungstemperatur zwischen 60°C und 100°C liegt.

6. Verfahren nach Anspruch 1, worin dem Reaktionsgemisch ein Polymerisationsinhibitor zugesetzt wird.

7. Verfahren nach Anspruch 6, worin der Polymerisationsinhibitor Hydrochinonmonomethylether oder Toluchinon ist.

8. Verfahren nach Anspruch 6, worin der Polymerisationsinhibitor in einer Menge von 0,01 bis 1 Gew.-%, bezogen auf das Reaktionsgemisch, verwendet wird.

9. Verfahren nach Anspruch 6, worin der Polymerisationsinhibitor in einer Menge von 0,1 bis 0,5 Gew.-%, bezogen auf das Reaktionsgemisch, verwendet wird.

10. Verfahren nach Anspruch 1, worin die Umsetzung in Lösung ausgeführt wird.

11. Verfahren nach Anspruch 10, worin Tetrahydrofuran als Lösungsmittel verwendet wird.

12. Verfahren zur Ausbildung von Überzügen mit guter Adhäsion an ein Metallsubstrat, das zur Aufnahme einer Farbe vorgesehen ist, die mit UV-Strahlen und Elektronenstrahlen oder mit Peroxiden vernetzbar ist, umfassend die Stufe der Zugabe einer wirksamen adhäsionsfördernden Menge des in Anspruch 1 definierten Estergemisches zu der jeweiligen vernetzbaren Farbe.

13. Verfahren nach Anspruch 12, worin die genannte wirksame adhäsionsfördernde Menge nicht mehr als 10 Gew.-%, bezogen auf das Gewicht der jeweiligen vernetzbaren Farbe, beträgt.

14. Verfahren nach Anspruch 13, worin die genannte adhäsionsfördernde Menge zwischen 1 und 3 Gew.-% der Farbe beträgt.

15. Verfahren nach Anspruch 12, worin das Metallsubstrat unter Eisen, Eisenlegierungen, Kupfer und Aluminium ausgewählt ist.

**Revendications pour les Etats contractants: BE CH DE FR GB LI LU NL SE**

1. Mélange de monoesters et de diesters, présentant la formule générale:

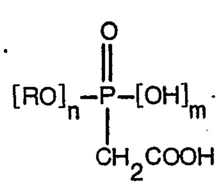

dans laquelle

R représente soit

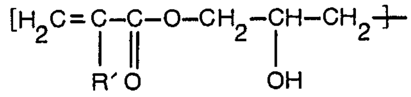

soit 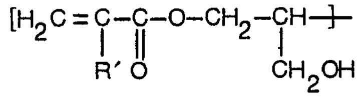

R' représente H ou $CH_3$;
n vaut 1 ou 2, et
m vaut 0 ou 1.

2. Procédé de préparation du mélange de monoesters et de diesters conforme à la revendication 1, caractérisé en ce que l'on fait réagir de l'acrylate de glycidyle ou du méthacrylate de glycidyle avec de l'acide dihydroxyphosphonoacétique.

3. Procédé conforme à la revendication 2, dans lequel le rapport molaire de l'acrylate de glycidyle à l'acide dihydroxyphosphonoacétique, ou le rapport molaire du méthacrylate de glycidyle à l'acide dihydroxyphosphono-acétique, est de 1:1,2 à 1:1,85.

4. Procédé conforme à la revendication 3, dans lequel lesdits rapports molaires sont de 1:1,35 à 1:1,6.

5. Procédé conforme à la revendication 2, dans lequel la température de travail se situe entre 20°C et 140°C.

6. Procédé conforme à la revendication 5, dans lequel la température de travail se situe entre 60°C et 100°C.

7. Procédé conforme à la revendication 2, dans lequel on ajoute un inhibiteur de polymérisation au mélange réactionnel.

8. Procédé conforme à la revendication 7, dans lequel l'inhibiteur de polymérisation est de l'éther monométhylique d'hydroquinone ou de la toluquinone.

9. Procédé conforme à la revendication 7, dans lequel on utilise l'inhibiteur de polymérisation en une quantité de 0,01% à 1% en poids par rapport au mélange réactionnel.

10. Procédé conforme à la revendication 9, dans lequel on utilise l'inhibiteur de polymérisation en une quantité de 0,1% à 0,5% en poids, par rapport au mélange réactionnel.

11. Procédé conforme à la revendication 2, dans lequel la réaction est effectuée en solution.

12. Procédé conforme à la revendication 11, dans lequel on utilise comme solvant du tétrahydrofuranne.

13. Procédé pour former des revêtements présentant une bonne adhérence à un substrat métallique destiné à recevoir une peinture que l'on peut réticuler à l'aide d'un rayonnement UV ou d'électrons ou à l'aide de peroxydes, qui comprend l'étape d'addition, à la peinture réticulable concernée, d'une quantité, active pour la promotion de l'adhérence, du mélange d'esters défini dans la revendication 1.

14. Procédé conforme à la revendication 13, dans lequel ladite quantité active pour la promotion de l'adhérence n'est pas supérieure à 10% en poids par rapport au poids de la peinture réticulable concernée.

15. Procédé conforme à la revendication 14, dans lequel ladite quantité active pour la promotion de l'adhérence se situe entre 1% et 3% du poids de la peinture.

16. Procédé conforme à la revendication 13, dans lequel le substrat métallique est choisi parmi le fer, les alliages de fer, le cuivre et l'aluminium.

**Revendications pour l'Etat contractant: AT**

1. Procédé de préparation d'un mélange de monoesters et de diesters, présentant la formule générale:

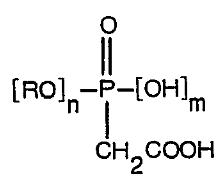

dans laquelle
R représente soit

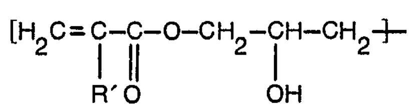

soit 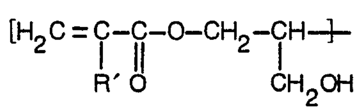

R' représente H ou $CH_3$;
n vaut 1 ou 2, et
m vaut 0 ou 1,
caractérisé en ce que l'on fait réagir de l'acrylate de glycidyle ou du méthacrylate de glycidyle avec de l'acide dihydroxyphosphonoacétique.

2. Procédé conforme à la revendication 1, dans lequel le rapport molaire de l'acrylate de glycidyle à l'acide dihydroxyphosphonoacétique, ou le rapport molaire du méthacrylate de glycidyle à l'acide dihydroxyphosphono-acétique, est de 1:1,2 à 1:1,85.

3. Procédé conforme à la revendication 2, dans lequel lesdits rapports molaires sont de 1:1,35 à 1:1,6.

4. Procédé conforme à la revendication 1, dans lequel la température de travail se situe entre 20°C et 140°C.

5. Procédé conforme à la revendication 4, dans lequel la température de travail se situe entre 60°C et 100°C.

6. Procédé conforme à la revendication 1, dans lequel on ajoute un inhibiteur de polymérisation au mélange réactionnel.

7. Procédé conforme à la revendication 6, dans lequel l'inhibiteur de polymérisation est de l'éther monométhylique d'hydroquinone ou de la toluquinone.

8. Procédé conforme à la revendication 6, dans lequel on utilise l'inhibiteur de polymérisation en une quantité de 0,01% à 1% en poids par rapport au mélange réactionnel.

9. Procédé conforme à la revendication 8, dans lequel on utilise l'inhibiteur de polymérisation en une quantité de 0,1% à 0,5% en poids, par rapport au mélange réactionnel.

10. Procédé conforme à la revendication 1, dans lequel la réaction est effectuée en solution.

11. Procédé conforme à la revendication 1, dans lequel on utilise comme solvant du tétrahydrofuranne.

12. Procédé pour former des revêtements présentant une bonne adhérence à un substrat métallique destiné à recevoir une peinture que l'on peut réticuler à l'aide d'un rayonnement UV ou d'électrons ou à l'aide de peroxydes, qui comprend l'étape d'addition, à la peinture réticulable concernée, d'une quantité, active pour la promotion de l'adhérence, du mélange d'esters défini dans la revendication 1.

13. Procédé conforme à la revendication 12, dans lequel ladite quantité active pour la promotion de l'adhérence n'est pas supérieure à 10% en poids par rapport au poids de la peinture réticulable concernée.

14. Procédé conforme à la revendication 13, dans lequel ladite quantité active pour la promotion de l'adhérence se situe entre 1% et 3% du poids de la peinture.

15. Procédé conforme à la revendication 12, dans lequel le substrat métallique est choisi parmi le fer, les alliages de fer, le cuivre et l'aluminium.